Europäisches Patentamt

(19) European Patent Office

Office européen des brevets

(11) Numéro de publication: **0 099 816**
**B1**

(12) **FASCICULE DE BREVET EUROPEEN**

(45) Date de publication du fascicule du brevet:
**07.01.87**

(21) Numéro de dépôt: **83401432.6**

(22) Date de dépôt: **11.07.83**

(51) Int. Cl.⁴: **G 01 N 29/04**

(54) **Procédé et dispositif d'échographie ultrasonore.**

(30) Priorité: **13.07.82 FR 8212299**

(43) Date de publication de la demande:
**01.02.84 Bulletin 84/5**

(45) Mention de la délivrance du brevet:
**07.01.87 Bulletin 87/2**

(84) Etats contractants désignés:
**BE DE GB IT**

(56) Documents cités:
**DE - A - 2 636 246**
**FR - A - 1 422 190**
**FR - A - 2 297 419**
**FR - A - 2 428 254**
**US - A - 3 828 609**

(73) Titulaire: **COMPAGNIE GENERALE DES MATIERES NUCLEAIRES (COGEMA), 2, rue Paul Dautier B.P. 4, F-78141 Velizy-Villacoublay (FR)**

(72) Inventeur: **Perdijon, Jean, 771 Ch. de Rosat, F-38330 St. Ismier (FR)**

(74) Mandataire: **Fort, Jacques et al, CABINET PLASSERAUD 84, rue d'Amsterdam, F-75009 Paris (FR)**

# Description

La présente invention concerne le domaine de l'échographie ultrasonore à balayage et elle a plus particulièrement pour objet un procédé et un dispositif d'échographie permettant de localiser les zones de réflexion d'un faisceau fin d'ultrasons dirigé dans une pièce à travers une surface de celle-ci.

L'invention trouve une application importante, bien que non exclusive, dans le contrôle non destructif des pièces, et en particulier dans la vérification des pièces soudées ou massives, où les fissures constituent des réflecteurs pour les faisceaux d'ultrasons dirigés transversalement au développement en plan de la fissure.

On connaît déjà de nombreux procédés d'échographie utilisant un balayage de la pièce à contrôler à l'aide d'un faisceau d'ultrasons focalisé. Le principe mis en œuvre est en général le suivant:

Un faisceau d'ultrasons finement focalisé est dirigé dans la pièce. Lorsqu'il rencontre un réflecteur, constitué par une hétérogénéité, on reçoit en retour un écho dont l'amplitude dépend de l'aire du réflecteur (si elle est inférieure à la section du faisceau), de son orientation et de son coefficient de réflexion. L'écho est recueilli, en général par le traducteur d'émission, et on peut localiser le réflecteur par la mesure du temps de parcours. On peut ainsi déterminer le contour d'un réflecteur en sélectionnant les échos dont l'affaiblissement par rapport à l'amplitude correspondant à un réflecteur plan étendu de même orientation, à la même profondeur, est inférieur à un seuil, −6 dB en général.

En règle générale, l'exploration d'une pièce s'effectue par balayage de sa surface selon deux directions perpendiculaires, avec une incidence constante dans un plan qui, au cours de l'exploration, garde une même orientation par rapport à un axe de symétrie de la pièce. Ces procédés présentent le grave inconvénient de ne permettre de déceler que les réflecteurs qui sont frappés par le faisceau d'ultrasons sous une incidence ne s'écartant pas trop de la normale.

Des réflecteurs peuvent donc passer inaperçus et il s'agit là d'un inconvénient particulièrement grave pour le contrôle non destructif.

On a déjà proposé (FR-A 2 297 419) un procédé suivant le préambule de la revendication 1. Il n'est pas prévu que la zone à examiner reçoive plusieurs fois le faisceau sous des incidences différentes et au surplus, il y a visualisation des réflexions au fur et à mesure qu'elles se produisent, de sorte que des réflecteurs peuvent rester indécelés.

On connaît également (DE-A 2 636 246) un procédé d'examen ultrasonore des régions des pénétrations d'une cuve de réacteur nucléaire consistant à déplacer une tête de mesure en translation et en rotation de façon qu'il y ait recouvrement partiel des volumes examinés. Mais les différentes informations recueillies ne sont pas combinées pour donner une présentation globale, qu'il serait d'ailleurs difficile d'élaborer étant donné les variations de l'angle d'incidence.

L'invention vise à fournir un procédé d'échographie répondant mieux que ceux antérieurement connus aux exigences de la pratique, notamment en ce qu'il permet de déterminer la présence de zones constituant réflecteurs d'ultrasons, telles que des fissures ou criques dans un milieu, tel qu'un organe ou surtout une pièce, quel que soit l'azimut de ces réflecteurs (orientation par rapport à la normale à la surface de la pièce).

Dans ce but, l'invention propose notamment un procédé d'échographie suivant la partie caractérisante de la revendication 1. On voit que tous les signaux obtenus balayage de la pièce et dont les informations montrent qu'ils concernent un même volume élémentaire de la pièce sont superposés au même point de la représentation. Cette solution peut être mise en œuvre de façon simple, car il existe déjà dans le commerce de nombreux programmes d'ordinateur permettant de fournir une représentation en perspective, souvent même de la faire tourner sur un écran de visualisation.

Pour obtenir une résolution élevée, on formera généralement le faisceau d'ultrasons à l'aide d'un transducteur constitué par une pastille unique de matériau piézo-électrique montée contre un bloc amortisseur, afin d'obtenir des impulsions courtes, de forme appropriée ou associée à une lentille ultrasonore de focalisation.

En général, on se contentera de détecter, pour chaque orientation, la présence d'échos dont l'amplitude est supérieure au seuil (typiquement de −6 dB par rapport à un réflecteur étendu) et de mémoriser les coordonnées des zones ayant donné naissance à un tel écho.

Dans une variante de réalisation permettant de fournir une représentation plus élaborée, on numérise l'amplitude du signal haute fréquence d'écho reçu, ce qui correspond à plusieurs niveaux de gris ou à des couleurs arbitraires, et on effectue une sommation des échos correspondant à chacun des éléments de volume centrés sur un nœud d'un réseau à trois dimensions dans le milieu. Un tel procédé conduit à une amélioration du rapport signal/bruit par moyennage du signal/bruit par moyennage du signal haute fréquence. Il oblige évidemment à disposer d'un volume de mémoire beaucoup plus important, puisqu'il faut faire correspondre un élément de mémoire à chaque élément de volume du milieu.

L'invention vise également à fournir un appareil d'échographie susceptible d'être réalisé par adjonction de composants simples et de coût peu élevé à une installation d'échographie existante comportant déjà des moyens de calcul, appareil accroissant la capacité du dispositif à détecter des réflecteurs ultrasonores dans un milieu quel que soit l'azimut de ces réflecteurs. Dans ce but, l'invention propose un appareil suivant la revendication 5.

Les moyens de calcul seront généralement prévus pour déterminer l'emplacement des sources d'écho dans un système de coordonnées lié à la pièce à partir du temps de parcours des ultrasons, de l'emplacement de l'axe et des coordonnées des moyens d'émission et de réception par rapport à l'axe.

L'invention sera mieux comprise à la lecture de la description qui suit de modes particuliers de réalisation, donnés à titre d'exemples non limitatifs. La description se réfère aux dessins qui l'accompagnent, dans lesquels:

— la fig. 1 est un schéma montrant les grandeurs qui interviennent lors du balayage d'une pièce,

— la fig. 1A est un schéma montrant un type de balayage possible pour la mise en œuvre de l'invention,

— la fig. 2 est un schéma montrant une application possible de l'invention au contrôle des soudures dans une pièce composite, montrée en coupe,

— la fig. 3 est un schéma de principe montrant une sonde utilisable pour une variante de mise en œuvre de l'invention, destinée à l'exploration manuelle d'une pièce,

— la fig. 4 montre schématiquement la représentation en perspective d'un réflecteur sur un organe de visualisation.

Bien que l'invention soit applicable au contrôle de tout milieu limité par une surface géométrique simple, on supposera pour simplifier que la pièce présente une face plane accessible à travers laquelle sera faite l'exploration. Il est très fréquent que l'on se trouve dans ce cas et que les réflecteurs à déceler aient à peu près tous la même orientation dans un plan perpendiculaire à la surface de la pièce, c'est-à-dire la même inclinaison, tandis que leur azimut (angle d'orientation dans un plan perpendiculaire à la normale de la pièce au point d'incidence) est très variable.

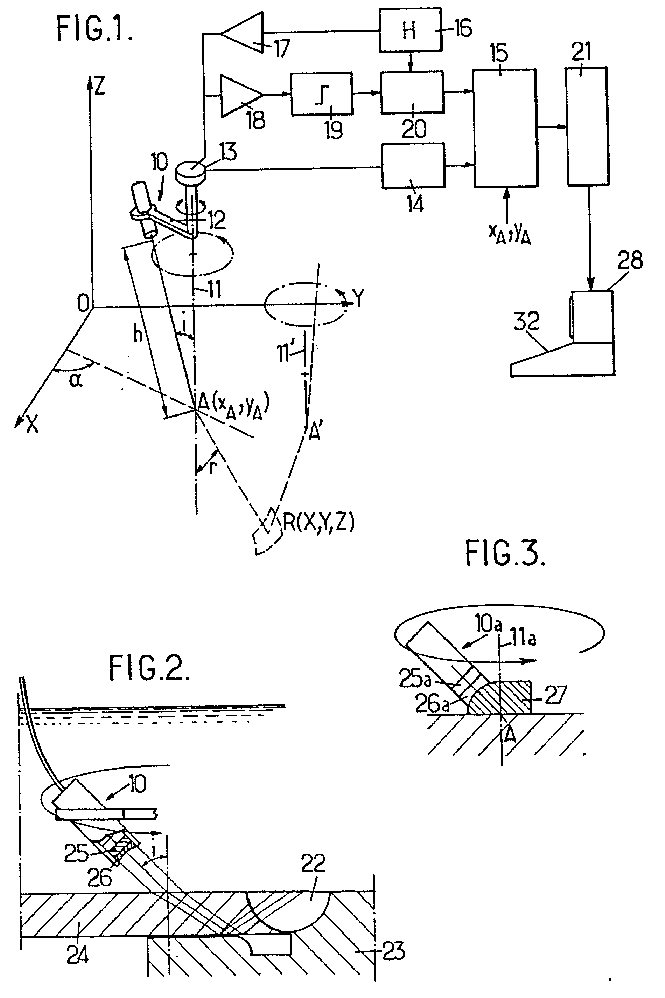

Sur la figure 1, on a représenté un trièdre de référence OXYZ, le plan OXY étant confondu avec la surface de la pièce. L'exploration de celle-ci est effectuée à l'aide d'un traducteur ultrasonore 10 d'émission et de réception dont la distance h au point d'entrée dans la pièce est maintenue constante. Pour cela, on déplace le traducteur suivant un cercle, avec une inclinaison telle que le faisceau pénètre dans la pièce en un point d'incidence A correspondant à l'intersection de l'axe de rotation avec la surface de la pièce. Ainsi le parcours préliminaire du faisceau d'ultrasons, entre le traducteur 10 et la pièce, est constant. De plus, la forme du faisceau dans la pièce ne se modifie pas.

On choisira en règle générale un traducteur 10 à focalisation, fournissant un faisceau étroit approximativement cylindrique. On connaît déjà de nombreux traducteurs de ce type. En général, le traducteur 10 et la pièce sont immergés dans un liquide, tel que l'eau, contenu dans une cuve, non représentée. Le traducteur 10 est porté par une potence 12 donnant au traducteur une distance h par rapport à la pièce et une inclinaison déterminées. Cette potence fait partie d'un équipage mobile en rotation autour de l'axe 11, comportant des moyens 13 de mesure de la position angulaire de la potence, fournissant l'angle $\alpha$ du traducteur autour de l'axe 11.

Un tel dispositif permet d'effectuer plusieurs balayages angulaires successifs autour d'axes perpendiculaires à la pièce, par exemple les axes 11 et 11' sur la figure 1. Pour éviter la nécessité de joints tournants d'alimentation électrique du traducteur, l'équipage mobile peut être prévu pour osciller entre deux positions extrêmes définies par des butées plutôt que pour tourner toujours dans le même sens. On peut également utiliser des miroirs tournants, bien qu'ils allongent le parcours préliminaire. On peut également combiner un mouvement de translation suivant par exemple la direction Y, et un mouvement conique (figure 1A). Dans tous les cas le déplacement en translation entre deux rotations de 360° du traducteur 10, et l'angle d'incidence i sont choisis en tenant compte de la dimension transversale du faisceau de façon que chaque élément de volume de la partie à examiner de la pièce reçoive au moins deux fois le faisceau sous des azimuts différents.

La détermination des coordonnées X, Y, Z du premier réflecteur rencontré par un faisceau ultrasonore lors d'un tir donné, correspondant à des valeurs déterminées de h, i et $\alpha$, peut toujours être réalisée par un calcul simple, notamment lorsque la surface d'entrée du faisceau d'ultrasons est plane. En effet, le parcours préliminaire du faisceau d'ultrasons dans le liquide reste constant et égal à h. Avec les notations indiquées en figure 1, on voit que l'apparition d'un écho S de niveau supérieur au seuil est liée à la présence d'un réflecteur R dans la pièce par les relations:

$$\begin{cases} X = x+(h \sin i+c_1 t \sin r) \cos \alpha, & (1) \\ Y = y+(h \sin i+c_1 t \sin r) \sin \alpha & (2) \\ Z = -c_1 t \cos r. & (3) \end{cases}$$

Puisque le calculateur peut recevoir les coordonnées numérisées $x_A$ et $y_A$ du point A, données par des codeurs équipant une table portant la potence 12, il n'est pas nécessaire de remonter aux coordonnées x, y du centre de l'émetteur et on obtient les coordonnées du réflecteur par le système suivant d'équations (1'), (2') et (3') qui ne contient ni h, ni l'angle d'incidence i:

$$\begin{cases} X = x_A+c_1 t \sin r \cos \alpha, & (1') \\ Y = y_a+c_1 t \sin r \sin \alpha, & (2') \\ Z = -c_1 t \cos r. & (3') \end{cases}$$

Dans les formules ci-dessus, t désigne le temps d'aller (ou de retour) dans la pièce, r l'angle de réfraction (déduit de i par la loi de Descartes), $\alpha$ l'azimut du traducteur 10; h, r et la célérité $c_1$ dans la pièce sont connus et constants.

En pratique, on mettra généralement en œuvre l'invention dans une installation existante, déjà munie d'une cuve à balayage XY, telle par exemple que la cuve fabriquée et commercialisée par la COMPAGNIE GENERALE DE RADIOLOGIE sous la référence CE2. Le système de mesure de cette cuve permettra de fournir les coordonnées $x_A$ et $y_A$ du point A suivant OX et OY. Un capteur de mesure d'angle de rotation, à sortie numérique ou muni d'un convertisseur analogique/numérique 14, fournit la valeur de $\alpha$ à un calculateur 15 qui reçoit également les coordonnées numérisées de A.

La détection des échos d'amplitude supérieure au seuil peut s'effectuer de façon classique, en utilisant par exemple un circuit du genre montré en figure 1, où on suppose que la vitesse de rotation du traducteur 10 est suffisamment faible pour qu'il soit possible d'utiliser le même traducteur à l'émission et à la reception. Le circuit comporte une horloge 16 envoyant, à intervalles réguliers, des impulsions qui sont amplifiées en 17 et appliquées au traducteur. Les signaux en retour, amplifiés en 18, sont appliqués à un détecteur à seuil 19. Le temps de parcours entre émission et réception d'un écho supérieur au seuil est mesuré par un circuit 20 qui attaque également le calculateur 15. Les coordonnées XYZ de chaque écho retenu sont stockées par le calculateur dans une mémoire 21.

Il faut remarquer au passage que les relations entre coordonnées sont plus complexes lorsque la pièce n'a pas de surface plane, mais on peut cependant se contenter en général des relations 1, 2 et 3 ci-dessus qui fournissent une représentation de la pièce que l'on peut assimiler à un développement.

La table de déplacement en OX et OY permet d'effectuer des explorations coniques de la pièce autour d'axes 11 successifs. Deux axes 11 et 11' ont été représentés sur la figure 1 et l'on voit que le réflecteur R, constitué par exemple par une fissure ou une crique, apparaîtra beaucoup mieux au cours du balayage autour de l'axe 11 qu'autour du balayage suivant l'axe 11', le faisceau dirigé dans la pièce suivant A'-R étant dans ce dernier cas presque parallèle à la direction du réflecteur.

Il suffira en règle générale d'un calculateur de petite taille, par exemple du type HP 85 (HEWLETT-PACKARD), éventuellement complété par des mémoires supplémentaires. A la fin du balayage de la pièce autour d'un nombre d'axes 11 successifs qui dépendra des dimensions de la pièce, le calculateur 15 restitue les coordonnées de chaque zone correspondant à un signal d'écho significatif. La restitution peut en particulier se faire sous forme d'une représentation en perspective de la pièce sur l'écran du moniteur associé au calculateur. Eventuellement, cette image peut être stockée puis comparée, ajoutée ou retranchée à une image obtenue dans des conditions différentes, par exemple avec un angle i différent.

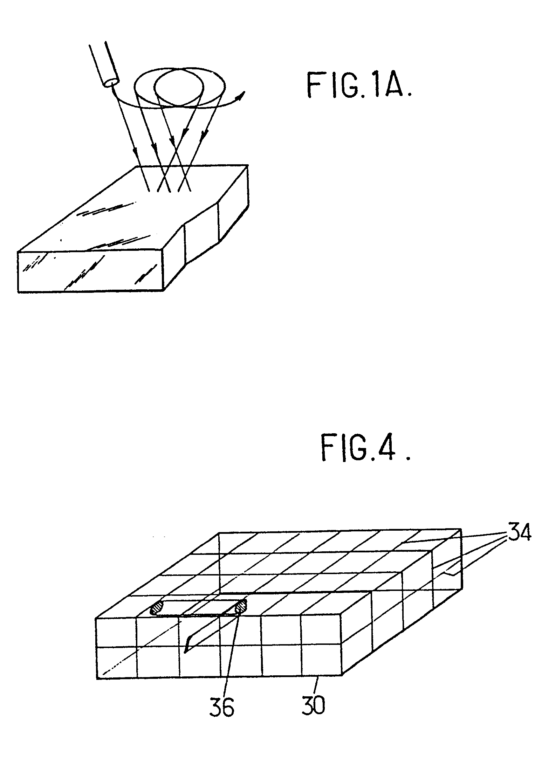

La figure 4 montre un mode de représentation avantageux sur un moniteur 28 constituant l'organe de sortie d'un calculateur 21 dans lequel a été mémorisé un programme de représentation en perspective similaire à ceux déjà disponibles dans les bibliothèques proposées par les constructeurs. La forme de la pièce 30, qu'on supposera parallélépipédique, est définie en introduisant, à l'aide du clavier 32, les coordonnées de ses coins suivant OX, OY et OZ; à partir de ces données le calculateur élabore un quadrillage régulier 34 faisant apparaître la forme de la pièce.

Pour chaque tir, le calculateur calcule les coordonnées X, Y et Z des réflecteurs et il effectue un transcodage consistant en une opération d'arrondi affectant au réflecteur les coordonnées $X_1$, $Y_1$, $Z_1$ du point le plus proche d'un quadrillage prédéterminé, plus serré que le quadrillage 34, visualisé et choisi en fonction de la largeur du faisceau; chaque nœud du quadrillage définit ainsi un élément de volume. Les échos successifs obtenus pour des azimuts différents sont cumulés et fournissent une représentation globale en perspective, telle que celle montrée en 36 sur la figure 4, ainsi que la projection sur deux faces.

On voit que la mise en œuvre de l'invention peut s'effectuer dans des conditions adaptées à chaque cas particulier et que de nombreux paramètres peuvent être sélectionnés pour répondre au mieux à la nature de la pièce et au type d'anomalie à détecter.

A titre d'exemple, on a montré sur la figure 2 une mise en œuvre possible de l'invention pour détecter les fissures éventuelles dans un cordon de soudure hexagonal 22 entre un bouchon 23 et un tube à section hexagonale 24, l'un et l'autre en acier. Le traducteur 10 est constitué par une pastille de titanate de baryum 25 d'au moins 10 millimètres de diamètre, placée entre un bloc amortisseur et une lentille de focalisation 26. En général, on adoptera une pastille dont la fréquence de résonance est comprise entre 2 et 10 MHz. L'angle d'incidence i sera notamment choisi en fonction de la nature des ondes utilisées (ondes longitudinales si l'on souhaite favoriser la traversée du métal, ondes transversales si l'on souhaite renforcer les échos). Les essais ont essentiellement été effectués avec un traducteur présentant une longueur focale de l'ordre de 50 mm, travaillant en ondes transversales à 5 MHz, la pastille 25 ayant 10 mm de diamètre. Le trajet préliminaire h dans l'eau de la cuve était de 24 mm. L'angle d'incidence i était de 25 degrés et conduisait à un angle moyen de réfraction de 70 degrés et à un angle de réflexion sur la face interne du même ordre. Le cercle de moindre diffusion du faisceau (correspondant à la distance focale à partir du traducteur) se plaçait ainsi approximativement au plan de joint, au sein de la soudure. La pièce est immergée dans une cuve du type commercialisé par la CGR sous le nom CE2. Le cordon est exploré face par face, en plusieurs passages effectués parallèlement au cordon, avec un pas de l'ordre de 0,5 mm. L'apparition lors de cette exploration d'un signal supérieur au seuil fixé, déclenche la mesure de son retard par rapport à l'écho d'entrée, celle de $\alpha$ (donnée numériquement par un codeur optique) et la conversion en numérique des mesures $x_A$ et $x_A$, fournies analogiquement par la cuve. Ces mesures sont stockées dans une mémoiretampon, puis vidées dans le calculateur à chaque fin de ligne. Le calculateur, du type HP 85, donne en fin de balayage une vue en perspective sur son écran et permet de sortir des coupes ou des cartes sur table traçante.

L'invention est susceptible de très nombreuses variantes de réalisation. En particulier, comme cela a déjà été indiqué plus haut, on peut traiter l'ensemble du signal haute fréquene reçu après l'écho d'entrée et mémoriser sous forme quantifiée leur niveau, ce qui oblige toutefois à utiliser un calculateur plus puissant. On peut au contraire effectuer une exploration manuelle, avantageusement en temps réel pour identifier rapidement les zones à étudier plus en détail. Dans ce cas, il est souhaitable d'opérer par contact, avec un traducteur à sabot 10a qui peut être du genre montré en figure 3. Le traducteur 10a comporte encore une pastille piézoélectrique 25a, la focalisation est réalisée par une lentille 26a en contact avec un sabot métallique de liaison capable de tourner autour de l'axe 11a, ou par courbure de la pastille, ce qui évite d'interposer deux milieux différents, l'un pour la lentille et l'autre pour le sabot. Un film mince de liquide de couplage est interposé entre le sabot 27 et la surface de la pièce. Dans ce cas, il sera généralement préférable de repérer la position du traducteur 10a en coordonnées polaires par rapport au système d'axes liés à la pièce, ainsi que son orientation par rapport au rayon vecteur OA.

## Revendications

1. Procédé d'échographie ultrasonore permettant de localiser dans un milieu, les zones appelées zones d'échos dans lesquelles se produit une réflexion des ultrasons pénétrant dans le milieu, procédé suivant lequel on dirige un faisceau fin d'ultrasons dans ledit milieu au travers de l'une de ses surfaces et on détermine pour plusieurs positions du faisceau l'emplacement des zones d'échos alors détectées, suivant lequel on déplace le faisceau d'ultrasons, à qui l'on fait parcourir une distance constante avant de traverser ladite surface, suivant les génératrices de plusieurs cônes de révolution ayant leurs sommets sur ladite surface et leurs axes perpendiculaires à ladite surface, avantageusement de même angle au sommet de façon à ce qu'une même partie du milieu soit balayée par le faisceau sous plusieurs angles d'orientation différents dans un plan perpendiculaire à la normale à la surface de la pièce au point d'incidence, caractérisé en ce qu'on combine les informations renvoyées sous forme d'écho par chaque partie du milieu explorée sous lesdits angles d'orientation différents pour fournir une représentation en perspective des zones d'échos détectées dans le milieu.

2. Procédé selon la revendication 1, caractérisé en ce que l'on obtient les coordonnées en XYZ, dans un repère lié à la pièce, de chacune desdites zones d'échos, à partir de la position et de l'orientation du faisceau ainsi que du temps de parcours des ultrasons.

3. Procédé selon la revendication 1 ou 2, caractérisé en ce qu'on réalise une représentation en perspective des zones d'échos dans le milieu, en superposant des informations tout ou rien correspondant à chacune des parties dudit milieu pour des positions différentes du faisceau.

4. Procédé selon la revendication 1 ou 2, caractérisé en ce qu'on détermine un réseau à trois dimensions dans le milieu, découpant celui-ci en volumes élémentaires centres autour de chaque nœud du réseau, qu'on met sous forme numérique les amplitudes des ultrasons renvoyés par les zones d'échos dudit milieu et qu'on effectue pour chaque volume élémentaire du milieu centré sur un nœud dudit réseau la moyenne des dites amplitudes renvoyées par ledit volume élémentaire afin d'améliorer le rapport signal/bruit.

5. Appareil d'échographie ultrasonore permettant de localiser dans un milieu les parties dudit milieu appelées zones d'échos où se réfléchissent des ultrasons préalablement émis dans ledit milieu au travers d'une de ses surfaces, comprenant des moyens (10) d'émission d'un faisceau fin desdits ultrasons et de réception des échos de ces dits ultrasons, un dispositif (12) permettant de déplacer lesdits moyens à l'extérieur du milieu de façon à réaliser un balayage de ce dernier et des circuits de calcul des coordonnées dans un repère choisi des zones produisant un écho supérieur à un seuil prédéterminé, caractérisé en ce que ledit dispositif (12) est prévu pour donner auxdits moyens (10) un mouvement de balayage constitué par une rotation autour d'un axe (11) perpendiculaire à ladite surface, ceci en maintenant lesdits moyens dans une orientation telle que le faisceau d'ultrasons pénètre dans ledit milieu au point d'intersection dudit milieu avec ledit axe après avoir parcouru une distance toujours constante et pour répéter ce balayage autour de plusieurs axes (11, 11' ...) perpendiculaires à la surface de façon à ce que chaque partie du milieu exploré reçoive le faisceau sous plusieurs angles d'orientation différents dans un plan perpendiculaire à la normale à la surface de la pièce au point d'incidence, et en ce qu'il comporte des moyens pour combiner les informations renvoyées sous forme d'échos pour chaque partie explorée afin de donner une représentation au perspective des zones d'échos détectées dans le milieu.

6. Appareil suivant la revendication 5, caractérisé en ce que les circuits de calcul sont prévus pour permettre dans un repère lié à la pièce la détermination des coordonnés de chacune des zones d'échos détectées dans le milieu à partir du temps de parcours des ultrasons, des coordonnées de la position, sur la dite surface dudit milieu, du point d'intersection de celui-ci avec l'axe (11), et des coordonnées des moyens (10) d'émission et de réception des ultrasons par raport audit axe.

## Patentansprüche

1. Verfahren zur Ultraschall-Echografie zur Lokalisierung von Echozonen genannten Ultraschall-Reflexionszonen in einem Medium, das von dem Ultraschall durchsetzt wird, wobei ein begrenztes Ultraschall-Strahlenbündel in das Medium quer zu einer von dessen Oberflächen eingeleitet wird, und wobei für mehrere Positionen des Bündels die Lage der so erfassten Echozonen bestimmt wird, wobei anschliessend das eine konstante Distanz vor dem Durchschreiten der Oberfläche durchlaufende Ultraschallbündel, entsprechend den Erzeugenden einer Mehrzahl von Rotationskonusen, welche ihre Spitzen in der Oberfläche haben und deren Achsen senkrecht zu der Oberfläche stehen, vorzugsweise mit dem gleichen Scheitelwinkel derart, dass ein gleicher Teil des Mediums durch das Bündel unter mehreren unterschiedlichen Orientierungswinkeln in einer Ebene senkrecht zur Normalen der Oberflächen des Medium-Teils am Einfallspunkt überstrichen wird, verlagert wird, dadurch gekennzeichnet, dass die in Form von Echos gewonnenen Informationen jedes untersuchten Teils des Mediums zum Erhalt einer perspektivischen Darstellung der in dem Medium erfassten Echozonen unter den verschiedenen Winkelorientierungen kombiniert werden.

2. Verfahren nach Patentanspruch 1, dadurch gekennzeichnet, dass man die XYZ-Koordinaten in einem Teil des Mediums entsprechend einer zugeordneten Markierung, jeder dieser Echozonen aus der Position und der Orientierung des Bündels ebenso wie aus der Laufzeit des Ultraschalls erhält.

3. Verfahren nach Patentanspruch 1 oder 2, dadurch gekennzeichnet, dass eine perspektivische Darstellung der Echozonen in dem Medium dadurch erhalten wird, dass die Informationen jedes Teils des Mediums für verschiedene Positionen des Bündels überlagert werden.

4. Verfahren nach Patentanspruch 1 oder 2, dadurch gekennzeichnet, dass ein dreidimensionales Netz in dem jeweiligen Medium festgelegt wird, wodurch Elementarvolumina abgeteilt werden, welche um jeden Netzknoten angeordnet sind, in welche in numerischer Form die Amplituden der in den Echozonen des Mediums reflektierten Ultraschalls zugeordnet werden, und wobei für jedes Elementarvolumen des Mediums in dem Knotenpunkt des Netzes die Differenz der reflektierten Amplituden pro Elementarvolumen gebildet wird, um das Verhältnis Signal/Rauschen zu verbessern.

5. Vorrichtung der Ultraschall-Echografie zur Lokalisierung von Echozonen eines Mediums, an welchen sich Ultraschall bricht, welcher in diesem Medium im wesentlichen quer zu seinen Oberflächen ausgesandt wird, umfassend Einrichtungen (10) zur Emission eines begrenzten Ultraschall-Bündels und zum Empfang eines Echos dieses Ultraschalls, eine Vorrichtung (12) zur Verlagerung der Einrichtungen an der Aussenseite des Mediums derart, dass eine Abtastung des letzteren vorgenommen werden kann, und Schaltungen zur Berechnung von Koordinaten in einem gewählten Netz aus Zonen über einen bestimmten Rauschpegel produzieren, dadurch gekennzeichnet, dass die Vorrichtung (12) so ausgestaltet ist, dass sie der Einrichtung (10) eine Abtastbewegung verleihen kann, welche eine Rotation um eine Achse (11) senkrecht zu der Oberfläche umfasst, wobei die Einrichtungen derart orientiert werden, dass das Ultraschallbündel in das Medium im Schnittpunkt dieses Mediums mit der Achse nach Zurücklegung einer stets konstanten Strecke eindringt und zur Wiederholung dieser Abtastung um eine Mehrzahl von Achsen (11, 11' . . .) senkrecht zur Oberfläche derart, dass jeder Teil des untersuchten Mediums von dem Strahlenbündel unter mehreren unterschiedlichen Einfallswinkeln in einer Ebene senkrecht zur Normalen der Oberfläche des Teiles am Einfallspunkt getroffen wird, und dass Einrichtungen zur Kombination der Informationen, welche in Form von Echos geliefert werden, für jeden untersuchten Teil des Mediums vorgesehen sind, um auf diese Weise eine perspektivische Darstellung der Echozonen zu erhalten, welche in dem Medium erfasst wurden.

6. Vorrichtung nach Patentanspruch 5, dadurch gekennzeichnet, dass Rechenschaltkreise vorgesehen sind, um innerhalb einer dem Teil des Mediums zugeordneten Markierung die Koordinatenbestimmung jeder der erfassten Echozonen in dem Medium in Abhängigkeit von der Laufzeit des Ultraschalls, den Koordinaten der Position der Schnittpunkte mit der Achse (11) auf der Oberfläche des Mediums, und den Koordinaten der Einrichtung (10) zur Emission und zum Empfang von Ultraschall relativ zu dieser Achse zu ermöglichen.

## Claims

1. Ultrasound echography process for detecting, in a medium, those zones which are called echo zones, in which there is a reflection of ultrasounds penetrating into the medium, in which: a fine ultrasonic beam is directed into the medium through one of the surfaces thereof and the position of the zones exhibiting an echo is detected for a plurality of positions of the beam; the ultrasonic beam, which is caused to traval over a constant length path before it traverses said surface, is moved along generatrices of a plurality of cones having a rotational symetry and having their apices on said surface and their axes perpendicular to said surface, advantageously having the same apex angle, whereby a same portion of the medium is scanned by the beam under a plurality of different orientation angles in a plane which is orthogonal to the perpendicular to the surface of the medium at the incidence point, characterized in that the data reflected as an echo by each part of the medium explored under said different orientation angles are combined for providing an isometric representation of the echo zones detected in the medium.

2. Process according to claim 1, characterized in that the XYZ coordinates of each of said echo zones, in a reference triad bound to the piece, are derived from the location and the azimuth angle of said beam and from the time of flight of the ultrasounds.

3. Process according to claim 1 or 2, characterized in that an isometric representation of the echo zones in the said medium is obtained by summing «all or nothing» data each corresponding to each of the parts of the medium for different positions of said beam.

4. Process according to claim 1 or 2, characterized in that a three dimensional array is defined in the medium which separates said medium into elementary volumes each centered on one of the nodes of the array; the amplitudes of the ultrasounds reflected by the echo zones in said medium are digitized; and an average value of said amplitudes reflected by each elementary volume is computed for each elementary volume in the medium which is centered on a node for improving the signal to noise ratio.

5. Ultrasound echography apparatus for use in determining the location, in a medium, of those parts in said medium – called echo zones – where there is reflection of ultrasounds previously transmitted into said medium through one of the surfaces thereof, comprising means (10) for transmitting a fine ultrasound beam and for receiving echoes of said ultrasounds; a device (12) for moving said means outside of said medium for carrying out scanning of the latter and circuits for computing the coordinates within a selected reference triad of those zones which provide an echo which is higher than a predetermined threshold, characterized in that said device (12) is arranged for achieving a scanning movement of said means (10) which consists of a rotation about an axis (11) perpendicular to said surface while maintaining said means in an angular position such that the ultrasound beam enters said medium at the point where said medium intersects said axis after it has covered a distance which is always constant and for repeating the scanning about a plurality of axes (11, 11',...) perpendicular to the surface whereby each part of the scanned medium receives the beam under a plurality of different angular positions in a plane which is perpendicular to a line orthogonal to the surface of the part at the incidence point and in that it comprises means for combining the data sent back as echoes for each scanned portion for providing an isometric representation of the echo zones detected in the medium.

6. Apparatus according to claim 5, characterized in that the computing circuits are arranged for permitting to determine, within a reference triad bound to the part, the coordinates of each of the echo zones detected in the medium from the time of flight of the ultrasounds, from the coordinates of the position of the intersection point of the medium with the axis on said surface and from the coordinates of the means (10) for transmitting and receiving ultrasounds with respect to said axis.

FIG.1.

FIG.2.

FIG.3.

FIG.1A.

FIG.4.